Europäisches Patentamt

European Patent Office

Office européen des brevets

(11) Publication number: **0 152 744**
**B1**

## EUROPEAN PATENT SPECIFICATION

(45) Date of publication of patent specification: **27.04.88**

(51) Int. Cl.⁴: **G 11 B 5/72**

(21) Application number: **85100207.1**

(22) Date of filing: **10.01.85**

(54) Process for applying a lubricative and protective coating on a flexible magnetic recording medium.

(30) Priority: **01.02.84 US 576134**

(43) Date of publication of application:
**28.08.85 Bulletin 85/35**

(45) Publication of the grant of the patent:
**27.04.88 Bulletin 88/17**

(84) Designated Contracting States:
**DE FR GB IT**

(56) References cited:
DE-A-3 117 931
US-A-3 490 946
US-A-4 188 434

IBM TECHNICAL DISCLOSURE BULLETIN, vol. 24, no. 11A, April 1982; A.P. INGRAHAM et al. "Magnetic Media Protective Coating", page 5477

PATENT ABSTRACTS OF JAPAN, vol. 6, no. 41, 13th March 1982, page (P-106)(919); & JP-A-56-159835 (HITACHI MAXELL) 09-12-1981

PATENT ABSTRACTS OF JAPAN, vol. 6, no. 41, 13th March 1982 page (P-106) (919); & JP-A-56-159840 (HITACHI MAXELL) 09-12-1981

PATENT ABSTRACTS OF JAPAN, vol. 7, no. 196, 26th August 1983, page (P-219) (1341); & JP-A-58-94130 (MATSUSHITA) 04-06-1983

(73) Proprietor: **VERBATIM CORPORATION**
**323 Soquel Way**
**Sunnyvale California 94086 (US)**

(72) Inventor: **Arndt, John L.**
**1624 Hallbrook Drive**
**San Jose, Ca 95124 (US)**
Inventor: **Koo, Karlson**
**1392 Bel Aire Road**
**San Mateo, CA 94402 (US)**

(74) Representative: **Parent, Yves**
**Kodak-Pathé Département Brevets et Licences**
**Centre de Recherches et de Technologie Zone Industrielle**
**F-71102 Chalon-sur-Saône Cédex (FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates generally to a process in which a solid lubricative and protective coating is applied over a magnetic recording layer of a flexible magnetic recording medium by depositing on said magnetic recording layer a coating of tetrafluoroethylene telomer.

There is a rapidly growing demand for more effective types of storage media for microcomputers. Various devices and methods have been created to handle the storage of large quantities of information. Typically, information is stored on disk storage media, either a hard Winchester disk or a soft floppy disk. Floppy disks are slower than the hard disks and generally less reliable. Floppies have also more limited storage; currently in the range of 160—640 kilobytes. Floppies are also much less expensive than hard disks, but due to their construction and mode of use are very prone to wear and contamination from the environment, for example from fingerprints and coffee spills. Floppy disks also tend to deform under humidity and temperature changes causing the disk to well or shrink which shifts the narrow tracks. Such environmental contamination and hygroscopic effects can result in serious consequences on the readability of the disk. As disk manufacturers look to higher bit densities to increase storage space, it becomes more critical to protect the disk from contamination and to ensure correct head tracking. Additionally, the disks are interfaced by a read/write head which contacts the disk when the disk starts and stops its high speed rotation. Thus the disk may have a lubricant layer to reduce the frictional engagement therewith. Any lubricant coating on a magnetic recording medium must, however, be firmly bonded to the medium to prevent its accumulation on the head. The magnetic recording medium itself, consisting of minute particles of an oxide or iron of other metal, is highly abrasive to the head, and will rapidly degrade the head if it is not protected. Typically liquid lubricants are employed, but these require binders to maintain them in adherence to the medium. Despite the binders, the relatively high vapor pressure of many lubricants precludes their effectiveness over protracted periods. Solid lubricants have had only limited success, primarily because their inherent lack of flowability requires thick layers, increasing the gap spacing and thus decreasing magnetic impulse transfer between the head and the medium.

Floppy disks are typically constructed of a polyethylene terephthalate (PET) film known by the trade name Mylar (registered trademark), or a similar material, coated with a magnetic medium on which information may be stored and from which information may be retrieved. The magnetic medium, is a ferromagnetic recording medium and typically is a ferric oxide coating. This medium itself is sensitive to abrasion and environmental damage and to ensure its longevity it must be protected. This is accomplished in part by enclosing the disk in a jacket. The disk however is also susceptible to damage in use from pressure exerted by the read/write heads and by human handling. Accordingly it is advantageous to provide the disk itself with a protective coating. Typically the lubricant applied to the surface of the disk may have some protective qualities but such lubricants are primarily intended to reduce the frictional engagement of the read/write head with the surface of the disk, and are not protected in function.

Typical prior art approaches to coatings for magnetic recording media involve a liquid lubricant, applied to the surface of the medium. US—A—3,490,946 discloses a process considered initially, by which a coating is obtained in which a fluorocarbon polymer is dispersed in a relatively non-volatile fluorocarbon carrier. Such coating is intended and acts as a lubricant coating, and any protective effects are not disclosed. This prior art process also requires a binder in application of the lubricant, as the lubricant is a liquid. The process disclosed in US—A—4,188,434 utilizes a liquid lubricant, although a solid lubricant is also included. Other publications, for example US—A—3,998,989, disclose similar combinations of lubricating agents, i.e. solid-liquid or liquid-liquid mixtures. The processes disclosed in US—A—3,998,989 and US—A—4,232,072 are designed primarily for substrates other than magnetic recording media, such as photographic film and thermoplastic materials including phonograph records.

US—A—4,390,562 and US—A—4,330,150 relate to lubrication of metal surfaces and not to magnetic recording media. Other approaches include that of US—A—4,254,585 which describes a burnishing, cleaning and calendering process without the use of a coating for treating magnetic media, and US—A—4,391,851 which is a means of producing a high density magnetic coating on a tape.

In view of the prior art, the problem of providing an effective protective coating for flexible magnetic storage media still exists. None of the prior art disclose a coating which is resistant to environmental contaminants and which does not interfere with disk readability.

## SUMMARY OF THE INVENTION

Accordingly, it is an object of the present invention to produce a protective coating which lubricates and protects the disk surface.

It is a further object of the present invention to provide a physical seal to reduce or prevent lubricant migration off the magnetic layer.

It is an additional object of the present invention to provide a protective coating which prevents hygroscopic effects upon the substrate's dimensions.

It is an additional object of the present invention to make the disk resistant to hazards of the office environment, such as coffee and soda spills, water, ash and fingerprints.

It is another object of the present invention to provide a coating which eliminates the need for a burnishing step.

According to the invention, the initially defined process is, therefore, supplemented by subjecting the coating to a calendering operation which physically bonds said telomer into said magnetic recording layer, thereby making said flexible magnetic recording medium resistant to environmental damage.

It is an advantage of the present invention that the frictional engagement of the recording head with the disk is reduced.

It is a further advantage of the present invention that the disk surface is sealed from the deleterious effects of environmental hazards such as fingerprints and food stains.

It is a further advantage that the present invention acts as a physical seal to reduce or prevent lubricant migration from the magnetic layer.

It is yet another advantage of the present invention that the substrate is sealed from the hygroscopic moisture effects thereby reducing disk expansion and contraction.

It is another advantage of the present invention that the invention may eliminate the need for a hub ring on a floppy disk.

It is another advantage of the present invention that the need for burnishing of the magnetic layer is eliminated.

According to a preferred embodiment of the invention, said coating is deposited on said magnetic recording layer by applying a dispersion of said telomer in a volatile carrier, effecting removal of said carrier, and then buffing to remove excess telomer prior to said calendering operation; said volatile carrier may be e.g. a halogenated hydrocarbon or trichlorotrifluoroethane.

Preferably, the pressure of said calendering operation is between 100 and 15,000 N/m; and further said calendering operation is carried out with a drum type pressure calender at ambient temperature.

Usually, said flexible magnetic recording medium is a floppy disk.

These and other objects and advantages of the present invention will no doubt become apparent to those skilled in the art after having read the following detailed description of the preferred embodiment which is illustrated in the various drawing figures.

### IN THE DRAWING

Fig. 1 illustrates a perspective view of a flexible magnetic recording disk of the prior art;

Fig. 2 is a cross-sectional view of a portion of the disk of Fig. 1, taken along line 2—2 of Fig. 1;

Fig. 3 is a perspective view of a flexible magnetic recording disk of the present invention; and

Fig. 4 is a cross-sectional view of a portion of the disk of Fig. 3, taken along line 4—4 of Fig. 3.

### DETAILED DESCRIPTION OF THE PREFERRED EMBODIMENT

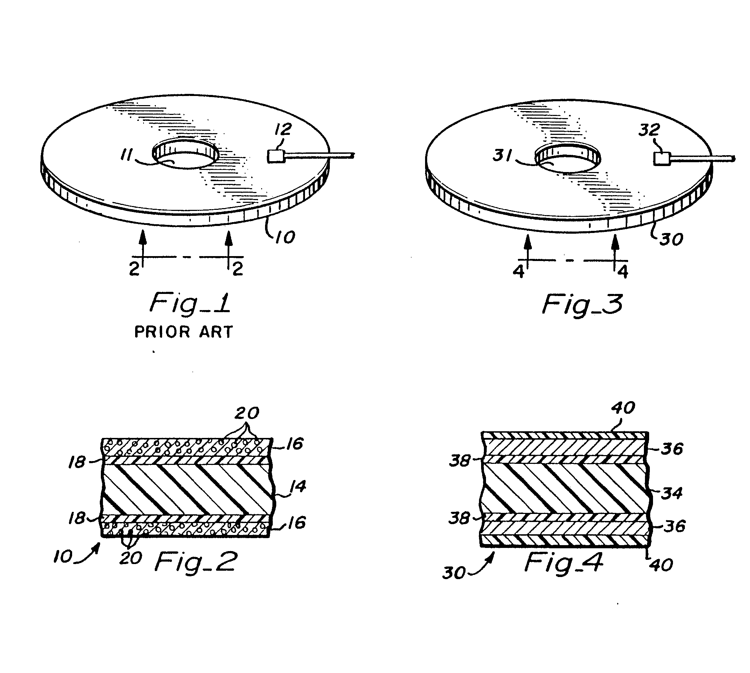

Fig. 1 illustrates a perspective view of a floppy disk of the prior art, referred to by the general reference character 10, and including a central mounting aperture 11. Also shown schematically is a read/write head 12, in position over the disk 10. Fig. 2 illustrates a cross-sectional view of the disk 10, taken along line 2—2 of Fig. 1. The disk 10 includes a substrate layer 14, to which is bonded a pair of magnetic recording layers 16 by a binder system 18. The magnetic layers 16 are very susceptible to degradation from wear, and thus may also contain an additive 20 which may include dispersants, lubricants and antistatic agents.

Fig. 3 illustrates a perspective view of a floppy disk of the present invention and referred to by the general reference character 30. The disk 30 includes a mounting aperture 31 and is illustrated with a read/write head 32 schematically shown in position above the disk 30. Fig. 4 illustrates a cross-section of a portion of the disk 30, taken along line 4—4 of Fig. 3. The disk 30 includes a PET substrate layer 34 to which is bonded a pair of magnetic recording layers 36 by a binder sytem 38. Impacted into each magnetic recording layer 36 is a protective coating 40. If the disks are manufactured with only one side certified for use, the coating 40 may be omitted from the uncertified side. The coating 40 comprises a dispersion of particles of tetrafluoroethylene which are in a solid form and average about five mm in size. Typically, the PET substrate layer 34 is about 75 μm (three mils) thick and the magnetic recording layer 36 is about 2,5 μm (one hundred micro-inches) thick. The coating 40 is layered atop the magnetic recording layer 36 to a depth of about 25 to 75 nm (one to three microinches).

A process for making the magnetic storage medium of the present invention is as follows. The substrate 34 comprising a polyethylene terephthalate or similar material is formed into the desired dimensions as known in the art. The magnetic recording layer 36 is deposited onto the substrate 34 also by any method utilized in the art. This magnetic layer 36 is bonded to the substrate 34 by the binder 38 as previously noted. A number of binders and magnetic particles are known, and may be utilized with the present invention. Such binders include urethanes, phenoxy compounds, vinyls, nitrocellulose compounds, epoxys and acrylics. Examples of magnetic materials include the iron oxides, chromium dioxides and ferrites. This magnetic recording layer 36 comprises, on a microscopic level, a plurality of magnetic particles whose orientation is random within the binder system 38. These particles may be needle shaped, however the future trend is towards isotropic, orthorhombic and other non needle-shaped particles in high bit density applications. These particles comprising the magnetic recording layer 36 possess magnetic domains, which are randomly oriented in the absence of a magnetic field. When a field is applied by the read/write head 32 the magnetic domains become oriented parallel to the lines of force of the applied field, thus storing a bit of data. Any coating to be applied onto the recording layer 36 must, accordingly, not be so thick as to interfere with the dynamics of the read/write head 32. Too thick of a lubricant coating will increase the head gap spacing and result in poor readability of the magnetic layer 36. Solid coatings have been employed as lubricants in the prior art, but have had limited success because they tend to increase the head gap spacing too much. Additionally, there may be surface irregularities in the height of the magnetic layer 36, caused by minor variations in the substrate 34 or by irregularities in the application of the magnetic medium 36.

These variations have created problems for lubricant coatings in the art as they must be sufficiently flowable to compensate for these topographical irregularities in order to result in a uniform surface. Prior art approaches to solving this problem utilize a flowable liquid coating which distributes itself into the topographical variations. Such a liquid coating however has limited protective qualities, and usually needs to be formulated in conjunction with a binder.

The coating 40 of the present invention is a solid suspension of a telomer of tetrafluoroethylene in a halogenated hydrocarbon carrier, and is applied as a surface coating to the magnetic recording medium 36 of the substrate 34 of the floppy disk 30 or other flexible magnetic medium such as a magnetic tape. This application may take the form of spraying, dipping, brushing, doctoring or any other means of application known in the art. The preferred formulation of the telomer and hydrocarbon carrier is a product manufactured by the Miller Stephanson Chemical Co., Inc. and carrying the product designation MS122 or MS143 (Registered Trademarks). These products contain a waxy, short chain telomer of tetrafluoroethylene, having an average molecular weight of approximately 3700, known under the trade name Vydax (Registered Trademark). The preferred form of halogenated hydocarbon carrier used to suspend the Vydax (Registered Trademark) is a fluorinated hydrocarbon, specifically Freon TF (Registered Trademark). The Freon TF (Registered Trademark) carrier is highly volatile, thus it evaporates rapidly from the surface of the disk 30, leaving behind a layer of pure telomer. This results in an opaque particulate film on the magenetic layer. At this point the telomer layer is too thick and non-uniform to allow the disk 30 to be utilized. To remove excess telomer, the coating 40 is buffed, using a fibrous wipe. The buffing acts to remove excess telomer particles from the surface of the magnetic recording layer 36, and further acts to force these particles, which are cold flowable, into the topographical irregularities of the recording layer 36. The resulting coating is highly lusterous and transparent and exhibits the desired resistance to fingerprints and environmental contaminants. After buffing, the surface coating 40 must be further reduced in thickness for use in recording data magnetically. To further decrease the spacing thickness of the coating 40, the substrate 34, recording layer 36 and coating 40 are calendered. The apparatus used in the calendering operation is a drum type pressure calender without heat, although heat may be employed when it is desirable to alter the characteristics of the coating 40 and/or the magnetic layers 36. For example, when a urethane binder is used, heat is unnecessary. An acrylate binder however, is much harder and may require heat to improve its and the telomer's flow characteristics. The calender pressure may range from 100 to 15,000 N/m (ten pounds per linear inch (PLI) to fifteen hundred PLI) depending on the type of substrate 34 and binder 38. The calender pressure may be varied to optimize telomer thickness and associated recording performance. The calendering is performed as known in the art, and may be done prior to the buffing step but the preferred method is to buff first and then calender. The calendering compacts the recording layer 36 as well as impacting and impinging the cold-flowable telomer coating 40 into the magnetic recording layer 36. This acts to physically bond the telomer particles to the recording layer 36 and results in a thin, uniform and stable coating 40 comprising a telomer layer on the magnetic recording layer 36. The calendering step, in addition to smoothing out irregularities in the magnetic recording layer 36, also compensates for the variations in chain-length of the varios telomers of tetrafluoroethylene comprising the Vydax (Registered Trademark) product. A uniform coating is achieved by mechanically forcing the telomer particles into the magnetic recording layer 36 to a uniform distance. This eliminates the need to homogenize the particles prior to application, for example by filtration.

The resultant disk 30 is fingerprint resistant due to the slickness of the coating 40, and, due to the telomer coating 40's low critical surface tension, the disk 30 is resistant to any aqueous solution such as coffee, water, soda, etc. The coating 40 may be applied to both the upper and lower magnetic recording layers 36 of the disk 30. This effectively seals the disk 30 from hygroscopic effects, and the dimensional fluxes associated therewith.

The invention additionally eliminates the need for a burnishing step in the manufacture of the floppy disks. Burnishing of the magnetic layer is done to eliminate loose oxides, which can cause dropouts, and to decrease spacing gap disparities. Because the coating 40 and process for applying it contains the magnetic layer and maintains uniform spacing gaps, the burnishing step can be eliminated. Because of the abrasion resistance of the coating 40, off-center clamping of the disk 30 will not result in a hub ring mark. Thus, the need for a hub ring is eliminated.

The following specific example of the invention will serve to further illustrate details of the present invention.

## Example 1

Three grouups of Verbatim Datalife (Registered Trademarks) 13 cm (five and one-quarter inch) single density floppy disks were obtained prior to burnishing and were sprayed on both sides with a suspension of Vydax AR (Registered Trademark) (a short chain telomer of tetrafluoroethylene) in Freon TF (Registered Trademark) (trichlorotrifluoroethane) solvent. The disks were sprayed until a uniform, slightly opaque layer was evident on the disk surfaces. The weight of the applied coating was determined to be approximately thirteen milligrams per side of the disks. The disks were then vigorously hand buffed with lint free wipe material, resulting in a high gloss transparent coating on the disk surfaces. The weight of the telomer material remaining on the disk surface was found to be approximately four milligrams per side of the disks. Each group of disks were then subject to a specific pressure in a steel roll/compliant roll calender at ambient temperature (21°C).

| GROUP | CALENDER PRESSURE N/m (PLI) |
|---|---|
| A | 3000 N/m (300 pli) |
| B | 5000 N/m (500 pli) |
| C | 6700 N/m (670 pli) |

Uncoated samples were calendered in each group. All of the disks were measured for signal playback amplitude, resolution and modulation, dropout levels, pad loaded and rotational torque, and durability. The disks were also checked for fingerprint, coffee, soda, water, cigarette ash, and dirt resistance. These results were compared to untreated Datalife (Registered Trademark) 13 cm (five and one-quarter inch) single density floppy disks.

Signal playback amplitude, resolution and modulation were not significantly different from the values of the untreated disks, and dropout levels of the surface coated and calendered disks were not significantly different from the untreated Datalife™ disks. Durability, pad loaded and rotational torque were within the specification for untreated Datalife™ disks. Durability, pad loaded and rotational torque were within the specification for untreated Datalife™ disks.

The surface coated and calendered disks were also subjected to coffee, soda and water contamination, and were found to be non-wettable. The aqueous contamination was easily removed by shaking the disks, and by the disk jacket liner material. The surface coated and calendered disks were further contaminated by cigarette ashes and dirt. This was also easily removed by shaking the disk and by the wiping action of the disk jacket liner material. Fingerprints that were applied to the disk were removed within several disk revolutions by the disk liner jacket material, or could be wiped off by a lint-free wipe material without affecting the disk performance.

An additional benefit of the coating as applied was the reduction or elimination of disk drive clamp marks upon the treated disk near the disk hub.

Although the present invention has been described in terms of the presently preferred embodiment, it is to be understood that such disclosure is not to be interpreted as limiting. Various alterations and modifications will no doubt become apparent to those skilled in the art after having read the above disclosure. Accordingly it is intended that the appended claims be interpreted as covering all alterations and modifications as fall within the scope of the invention.

**Claims**

1. A process in which a solid lubricative and protective coating is applied over a magnetic recording layer of a flexible magnetic recording medium by depositing on said magnetic recording layer a coating of tetrafluoroethylene telomer, characterized in that said coating is subjected to a calendering operation which physically bonds said telomer onto said magnetic recording layer, thereby making said flexible magnetic recording medium resistant to environmental damage.

2. A process as defined in claim 1 in which said coating is deposited on said magnetic recording layer by applying a dispersion of said telomer in a volatile carrier, effecting removal of said carrier, and then buffing to remove excess telomer prior to said calendering operation.

3. A process as defined in claim 2 wherein said volatile carrier is a halogenated hydrocarbon.

4. A process as defined in claim 2 wherein said volatile carrier is trichlorotrifluoroethane.

5. A process as defined in claim 1 wherein the pressure of said calendering operation is between 100 and 15,000 N/m.

6. A process as defined in claim 1 wherein said calendering operation is carried out with a drum type pressure calender at ambient temperature.

7. A process as defined in claim 1 wherein said flexible magnetic recording medium is a floppy disk.

**Patentansprüche**

1. Verfahren, bei dem eine feste, schmierende und schützende Schicht über eine magnetische Aufzeichnungsschicht eines flexiblen magnetischen Aufzeichnungsmediums aufgetragen wird, indem auf der magnetischen Aufzeichnungsschicht eine Tetrafluorethylentelomerschicht abgeschieden wird, dadurch gekennzeichnet, daß die Schicht einem Kalanderprozeß unterworfen wird, welcher das Telomer physikalisch in die magnetische Aufzeichnungsschicht bindet, wodurch das flexible magnetische Aufzeichnungsmedium gegenüber Umweltbeschädigungen widerstandsfähig gemacht wird.

2. Verfahren nach Anspruch 1, bei dem die Schicht auf der magnetischen Aufzeichnungsschicht durch Auftragen einer Dispersion des Telomeren in einem flüchtigen Träger, Entfernung des Trägers und Schwabbeln zwecks Entfernung von überschüssigem Telomer vor dem Kalanderprozeß abgeschieden wird.

3. Verfahren nach Anspruch 2, bei dem als flüchtiger Träger ein halogenierter Kohlenwasserstoff verwendet wird.

4. Verfahren nach Anspruch 2, bei dem als flüchtiger Träger Trichlortrifluorethan verwendet wird.

5. Verfahren nach Anspruch 1, bei dem der Druck des Kalanderprozesses zwischen 100 und 15 000 N/m liegt.

6. Verfahren nach Anspruch 1, bei dem der Kalanderprozeß mit einem Druck-Kalander vom Trommeltyp bei Umgebungstemperatur durchgeführt wird.

7. Verfahren nach Anspruch 1, bei dem das flexible magnetische Aufzeichnungsmedium ein Floppy-Disk ist.

**Revendications**

1. Procédé dans lequel on applique sur une couche d'enregistrement magnétique d'un milieu d'enregistrement magnétique flexible, un enduit solide protecteur et lubrifiant, en déposant sur la dite couche d'enregistrement magnétique un enduit de télomère de tétrafluoroéthylene, caractérisé en ce qu'on soumet le dit enduit à une opération de calendrage qui lie physiquement le dit télomère à la dite couche d'enregistrement magnétique, rendant ainsi le dit milieu d'enregistrement magnétique flexible résistant aux dommages causés par l'environnement.

2. Procédé tel que décrit à la revendication 1, dans lequel on dépose le dit enduit sur la couche d'enregistrement magnétique en appliquant une dispersion du télomère dans un véhicule volatil, en éliminant le véhicule, et ensuite en émeulant pour éliminer l'excès de télomère avant l'opération de calandrage.

3. Procédé tel que défini à la revendication 2, dans lequel la véhicule volatil est un hydrocarbure halogéné.

4. Procédé tel que défini à la revendication 2, dans lequel le véhicule volatil est du trichlorotrifluoroéthane.

5. Procédé tel que défini à la revendication 1, dans lequel la pression de l'opération de calandrage est comprise entre 100 et 15 000 N/m.

6. Procédé tel que défini à la revendication 1, dans lequel on réalise l'opération de calandrage avec une calandre à pression du type tambour à température ambiante.

7. Procédé tel que défini à la revendication 1, dans lequel le milieu d'enregistrement magnétique flexible est un disque souple.

Fig_1

PRIOR ART

Fig_3

Fig_2

Fig_4

0 152 744